# DEMANDE DE BREVET EUROPEEN

(11) **EP 1 156 646 A1**
(43) Date de publication de la demande: **21.11.2001**
(21) Numéro de dépôt: 01401257.9
(22) Date de dépôt: 15.05.2001
(51) Int. Cl.: H04M 1/725, H04Q 7/32, G06K 7/10

(54) **Téléphone mobile muni d'une caméra et procédé de programmation**

(30) Priorité: 17.05.2000 FR 0006485
(71) Demandeur: SAGEM S.A., 75015 Paris (FR)
(72) Inventeur: Heurtaux, Frédéric, 13610 Le Puy Ste Reparade (FR)
(74) Mandataire: Schmit, Christian Norbert Marie

(57) **Abrégé**

On réalise un téléphone mobile (1) muni d'une caméra (2). Ce téléphone est capable de modifier ses paramètres grâce à une lecture de codes barres. Le téléphone comporte des logiciels de lecture et d'interprétation de codes barres. Ce procédé est destiné à la programmation en masse de téléphone mobiles, à moindre coûts.

## Description

L'invention a pour objet un téléphone mobile muni d'une caméra ainsi que son procédé de programmation. Le domaine d'application est la téléphonie mobile, comprise autant en communication de paroles qu'en communication de données. Le but de l'invention est d'augmenter les capacités fonctionnelles des téléphones mobiles.

Pour modifier un paramètre d'un téléphone mobile, il est normalement nécessaire de consulter un spécialiste. Ce spécialiste possède des outils logiciels et matériels pour mener à bien une modification du téléphone mobile. Cette modification concerne la plupart du temps la modification d'un système d'exploitation du téléphone mobile. Cette modification est en pratique réalisée par un déblocage de fonctions initialement contenues dans un système d'exploitation installé, mais provisoirement neutralisées (notamment pour des raisons de souscription à des options supplémentaires d'utilisation du téléphone mobile). L'opération n'est pas réalisable par un particulier. Les problèmes d'une telle situation sont notamment son coût non négligeable, à payer en définitive par l'utilisateur, la perte de temps et la complexité de la démarche. Une telle mise à jour nécessite généralement la présence d'un connecteur de fond de boîtier dans le téléphone mobile.

Dans l'invention pour résoudre ces problèmes, on utilise des codes barres pour modifier ces paramètres de blocage et plus généralement les paramètres d'utilisation du téléphone mobile. Des codes barres sont connus pour permettre l'identification d'un produit. Ainsi des codes barres sont par exemple utilisés pour déterminer un prix ou une référence d'un livre dans une bibliothèque. Il est également connu, grâce à un code barre d'un film, un moyen simplifié de programmer un enregistrement télévisé. Dans l'invention, un code barre correspond notamment à un code de débridage permettant de débrider une fonction du téléphone mobile. Plus généralement, un code barre correspond à un paramètre d'utilisation du téléphone mobile. Dans l'invention, pour se servir d'un tel code barre pour modifier le mode d'utilisation du téléphone mobile, on utilise une caméra du téléphone mobile et des circuits supplémentaires. Ces circuits supplémentaires servent pour une lecture, un décodage et une interprétation d'un code barre. Le téléphone mobile peut alors être paramétré, au cours du temps, de façon simplifiée.

L'invention concerne donc un téléphone mobile comportant une caméra, un microprocesseur et une mémoire programme, caractérisé en ce que, pour lire des codes barres avec la caméra, la mémoire programme mémorise un sous-programme permettant une conversion d'un signal en un format vidéo saisi par la caméra, et représentatif d'une image d'un code barre à lire, en un signal en un format numérique et représentatif de ce code barre, et en ce qu'il comporte des circuits pour interpréter ces codes barres.

L'invention concerne aussi un procédé ' de programmation d'un téléphone mobile caractérisé en ce qu'il comporte les étapes suivantes :
- on lit un code barre avec une caméra de ce téléphone mobile,
- et on programme le téléphone avec le contenu d'un code barre lu.

La présente invention sera mieux comprise à la lecture de la description qui suit et à l'examen des figures qui l'accompagnent. Celles-ci ne sont présentées qu'à titre indicatif et nullement limitatif de l'invention. Les figures montrent:
- Figure 1: un téléphone mobile conforme à l'invention dont la caméra vise un document à étudier ;
- Figures 2a à 2c: une représentation schématique d'un téléphone mobile selon l'invention ;
- Figure 3: une représentation schématique du contenu d'un téléphone mobile selon l'invention ;
- Figure 4: une représentation d'une image d'un code barre.

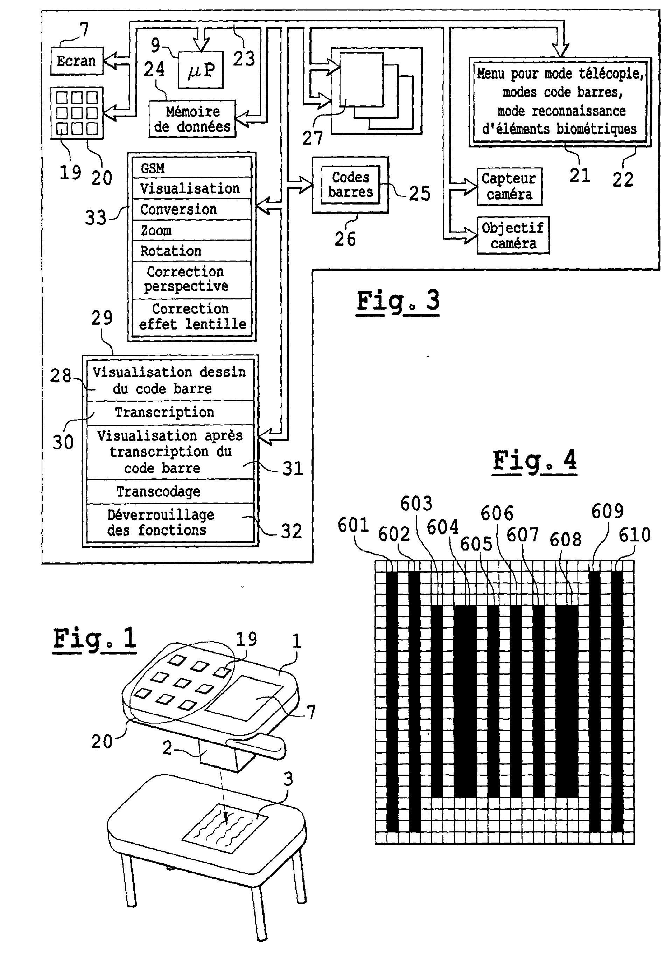

La figure 1 montre un téléphone mobile 1 conforme à l'invention. Il comporte une caméra 2. La caméra 2 vise un document 3. La caméra 2 peut être, par exemple, une caméra couleur 640 X 480 à 256 couleurs. Pour capturer une image du document à étudier la caméra peut disposer d'un ensemble dioptrique avec deux focales ou d'un jeu de lentilles droites.

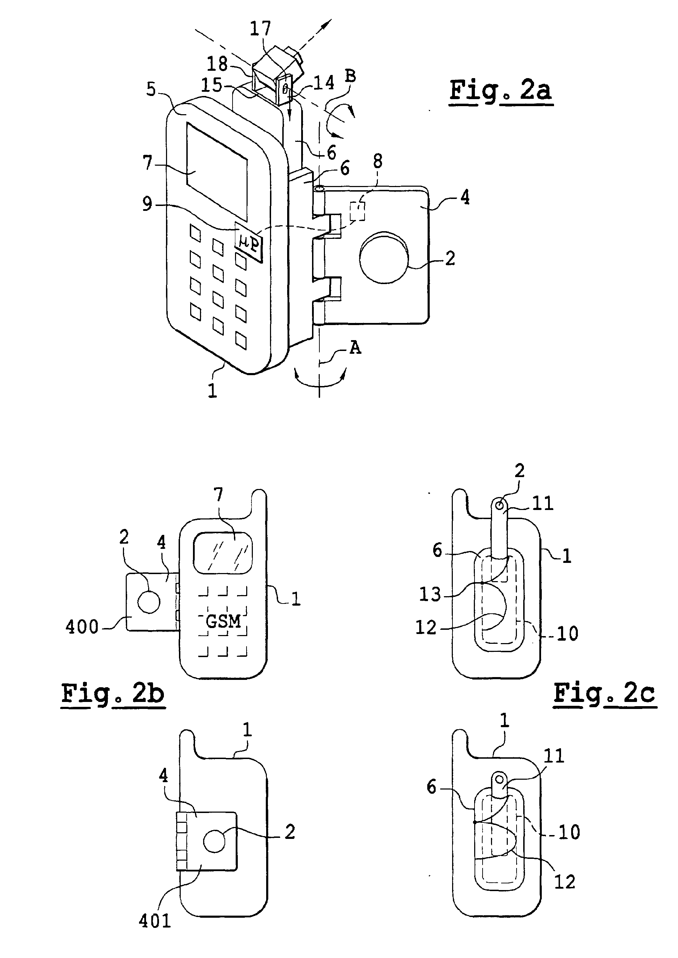

Les figures 2a, 2b, et 2c montrent des réalisations différentes pour la caméra 2. Trois solutions sont notamment envisageables. Une première solution, figure 2a, propose d'installer la caméra 2 sur un volet rabattable 4. Le volet 4 est ancré sur un boîtier 5 du téléphone 1 ou sur un boîtier amovible 6 d'une batterie du téléphone 1. La figure 2a représente une telle solution en trois dimensions.

La figure 2b montre la solution du volet rabattable 4 dans deux positions 400 et 401 possibles pour la caméra 2. Dans le cas de la position 400, l'objectif de la caméra 2 est orienté du même côté qu'un écran 7 du téléphone mobile 1. La position 401 correspond au cas où le volet pivotant est rabattu de l'autre côté du téléphone mobile. Ainsi l'objectif de la caméra 2 est dirigé, pour la position 401, depuis le côté du boîtier du téléphone ou il n'y à pas l'écran 7. Pour savoir dans quelle position se trouve le volet pivotant 4, une cellule photoélectrique 8 peut être placée du côté du volet pivotant 4 où il n'y a pas l'objectif. Cette cellule photoélectrique 8 est reliée à un microprocesseur 9 du téléphone 1 gérant le fonctionnement général de ce téléphone 1. Suivant l'éclairement que reçoit cette cellule photoélectrique 8, le microprocesseur 9 disposera d'une information révélant l'orientation du volet. En effet si la cellule 8 reçoit de la lumière, le volet 4 est dans la position 400. Et dans le cas contraire le volet 4 est dans la position 401.

La cellule photoélectrique 8 peut être, dans une autre réalisation, remplacée par une ampoule de Reed ou des circuits électriques pour parer à des problèmes de luminosité.

Le volet 4 peut pivoter autour d'un axe A parallèle à un côté du boîtier 6 de la batterie. La rotation du volet 4 autour de l'axe A est permise grâce à des charnières fixées le long d'un côté du boîtier 6. La forme géométrique du volet 4 peut être rectangulaire mais pas uniquement. Une forme circulaire ou encore ovale pourraient être aussi envisagées.

La figure 2c présente une deuxième solution avec un périscope. Un logement 10 pour un périscope 11 est réalisé, par exemple, dans le boîtier de la batterie 6. La caméra 2 est installée en tête du périscope 11. L'objectif de la caméra se trouve sur une face de la tige du périscope 11. Ainsi le périscope 11 peut s'emboîter dans le boîtier 6.

Lorsque le périscope 11 se déplace, il peut avoir une trajectoire 12 hélicoïdale. Et la position courante du périscope 11 détermine l'orientation de l'objectif de la caméra à savoir respectivement celle correspondant à la position 401 (périscope en position basse) ou à la position 400 (périscope en position haute). La position courante du périscope 11 est déterminée par exemple par l'état d'un interrupteur 13. L'interrupteur 13 peut être remplacé par un bouton de commande. Un état fermé ou ouvert de l'interrupteur 13 est interprété par le microprocesseur 9 : la position courante du périscope 11 correspond par exemple à une position de vidéoconférence. Un état ouvert de l'interrupteur 13 correspond à une position pour effectuer des lectures de codes barres.

Cependant, ces solutions ne proposent pas de protection de l'objectif de la caméra 2. L'objectif est toujours à découvert. Pour résoudre ce problème il est possible d'envisager un périscope 14 comme le montre la figure 3a dans lequel un logement est prévu pour accepter la caméra 2. La caméra 2 est alors escamotable. La caméra 2 pivote de préférence autour d'un axe B de telle sorte que l'objectif de la caméra puisse être protégé. Soit cet objectif est orienté vers la base du téléphone mobile, et la caméra est rentrée dans un logement 15. Soit l'objectif est protubérant, et est orienté comme l'écran 7 ou en sens opposé.

L'axe B de rotation de la caméra 2 est fixé par chacune de ses extrémités à des paliers mobiles 17 et 18. Les paliers mobiles 17 et 18 sont portés par des montants parallélépipédiques ayant un mouvement parallèle au mouvement du périscope 14 dans le logement 15 prévu pour la caméra. Des circuits installés sur la caméra 2 mobile sont reliés au microprocesseur 9 par l'intermédiaire de connecteurs situés par exemple sur les paliers mobiles 17 et 18. Suivant que l'objectif est dirigé du même côté que l'écran 7 ou non, une partie ou une autre de ces circuits sont en regard des connecteurs. Le microprocesseur 9 peut interpréter ce type de connexion pour en déduire l'orientation de la caméra.

L'orientation de la caméra 2 détermine de préférence la nature des opérations qui doivent être effectuées. La nature de l'orientation de la caméra 2 est déterminée par la reconnaissance de la position courante de la caméra 2.

La Figure 3 montre un ensemble de circuits contenus dans le téléphone mobile 1 selon l'invention. Si un utilisateur désire utiliser la caméra 2, il place, selon une réalisation manuelle, la caméra 2 à la position adéquate correspondant à l'opération qu'il veut effectuer, par exemple lire un code barre sur le document 3. La caméra 2 se retrouve alors de préférence dans la position 401.

L'utilisateur précise ensuite comment il choisit d'utiliser la caméra 2, en appuyant par exemple sur un bouton 19 d'un clavier de commande 20 du téléphone 1. Le microprocesseur 9 a repéré et interprété la position courante de la caméra 2. Un programme 21 d'une mémoire programme 22 entraîne alors un affichage sur l'écran 7 d'un menu proposant d'utiliser un mode pour la lecture de codes barres, ou un mode pour la télécopie, la reconnaissance d'éléments biométriques ou autres. Tous les choix effectués par l'utilisateur sont mémorisés par l'intermédiaire d'un bus 23 dans une mémoire de données 24.

Si l'utilisateur décide de faire une lecture de codes barres, il choisit dans le menu du programme 21 le mode correspondant. Un programme 25 d'une mémoire programme 26 est alors lancé en conséquence et permet de gérer le mode de lecture des codes barres. Un code barre représente dans l'application préférée un code de débridage d'une fonction du téléphone mobile.

Selon le programme 25, on mémorise d'abord une image du code barre dans un fichier 27. On peut également visualiser le code barre saisi et ou mémorisé grâce à un programme 28 contenu dans une mémoire programme 29. Ensuite un programme 30 contenu dans la mémoire programme 29 permet de transcrire le dessin du code barre en un numéro.

En visualisant le code barre, il est possible d'établir une mise au point. Dans le cas où la focale est fixe, le code barre comporte , par exemple, un motif permettant la mise au point. Cette mise au point est aidée par l'écran 7 qui peut indiquer une qualité de l'image capturée, par exemple, au moyen d'un indicateur (plus haut ou plus bas pour chaque coin de l'image) de façon à obtenir une meilleure orientation.

La figure 4 montre une représentation schématique d'un code barre. Le dessin du code barre comporte plusieurs barres verticales 601 à 610 de deux longueurs différentes. Une première longueur correspond au début ou à la fin du code barre (601 et 602, 609 et 610). Une deuxième longueur, plus petite que la première longueur, définit le code barre lui-même (603 à 609). Les barres de petites longueur n'ont pas toutes la même largeur. Ainsi les barres 604 et 609 sont plus larges que les barres 603, et 605 à 607. La répartition et les natures des barres 603-609 représentent le code barre lui-même à savoir un numéro particulier. Cette représentation est dictée par des normes et ou des protocoles propriétaires.

Ce numéro particulier, signal transcrit en clair et représentatif du code barre peut aussi être affiché sur l'écran 7 grâce à un programme 31 contenu dans la mémoire programme 29. Ce numéro particulier est un code de débridage et est mémorisé dans la mémoire de données 24. Un programme 32 de débridage permet ensuite de déverrouiller une fonction grâce au numéro particulier et de modifier en correspondance le fonctionnement du téléphone mobile. Un tel déverrouillage peut nécessiter, pour être pris en compte, de devoir arrêter le téléphone mobile 1, puis de le remettre en service. On utilise alors les fonctions d'initialisation du téléphone mobile pour le configurer, en fonctions des nouveaux paramètres enregistrés, dans un mode de fonctionnement incluant les fonctions débridées. Dans ce cas, les fonctions du téléphone mobile, contenues par exemple dans une mémoire programme 33 seront associées chacune à un index autorisant, selon sa valeur, l'exécution ou non de la fonction. C'est cet index qui est modifié lors du déverrouillage.

Une fois que la caméra a lu le code barre, on programme donc le téléphone avec le code barre lu.

Une première façon de programmer un téléphone mobile avec des codes barres serait d'utiliser une carte à gratter. Un carte à gratter est une carte qu'on achète auprès d'un distributeur et qui comporte des parties masquées par une pellicule grattable. Dans ce cas, on prévoit de préférence qu'un numéro IMEI, numéro de série, du téléphone mobile serve à désigner dans une carte les zones à gratter. Ce numéro est alors couplé avec une ou plusieurs zones à gratter portées par le document 3. En effet, les codes barres doivent être spécifiques au téléphone mobile 1 utilisé pour combattre le piratage.

Le code barre, ainsi lu, peut en plus comporter une identification de sa propre édition. Dans ce cas, les codes barres sont de préférence uniques. Après la lecture et la programmation correspondante du téléphone 1, au cours d'une connexion ultérieure du téléphone 1 avec les services de l'opérateur de téléphonie mobile, ce numéro d'identité de carte à gratter est neutralisé, de façon à ce qu'un autre utilisateur qui utiliserait la même carte à gratter ultérieurement (avec une partie commune de numéro IMEI, ou en masquant les zones déjà grattées et en en grattant d'autres) ne puisse bénéficier des fonctions supplémentaires attribuées au premier utilisateur de la carte. Dans ce but l'opérateur tient à jour un fichier des cartes à gratter neutralisées. Dans ce cas, le téléphone comporte des circuits pour capturer des images de codes barres, et pour éditer des signaux de signalisation permettant de transcoder un signal codé selon un protocole de code barre en un signal codé selon un protocole de téléphonie mobile.

Une autre façon de programmer le téléphone mobile serait la suivante. On fournit les codes barres par voie de presse classique, ou par voie électronique par l'intermédiaire du réseau Internet. Grâce à un écran d'ordinateur, on peut présenter les codes barres devant l'objectif de la caméra.

L'utilisation des codes barres peut aussi concerner les communications entre téléphones mobiles : un téléphone mobile montre sur son écran 7 un code barre mis en regard de la caméra d'un autre téléphone mobile.

Sur le plan technique, les principes de la lecture et de l'interprétation des codes barres sont connus. Le téléphone comporte alors notamment une mémoire programme qui mémorise un sous-programme permettant une conversion d'un signal en un format vidéo saisi par la caméra et représentatif d'une image d'un code barre à lire en un signal en un format numérique et représentatif de ce code barre. Dans le cadre de l'invention, la caméra utilisée permet de saisir des images de 200x200 pixels. Si on affecte un pavé de 3x3 pixels pour définir une barre d'un code (avec une signification binaire selon que tous les pixels sont noirs ou blancs), on pourrait transmettre de cette façon avec un code barre qui occuperait toute l'image saisie une information de 4Kbits. Une telle quantité d'information serait alors suffisante pour contenir les paramètres, et les instructions du programme de déverrouillage 32 si celle-ci ne sont pas déjà présente dans la mémoire 29.

Dans ce cas, le code barre à deux dimensions comportera de préférence des motifs permettant une mise au point de la focale de la caméra. L'écran du téléphone 1 sert par ailleurs à centrer la lecture du code barre.

Selon une réalisation, un support intercalaire, garantissant une bonne distance entre le code barre et l'objectif de la caméra 2, est mis à la disposition de l'utilisateur.

Par ailleurs un dispositif comportant un ensemble de codes barres peut être utilisé pour paramétrer des téléphones 1, par exemple, dans le cas d'une utilisation de cassettes vidéo comme intermédiaire de stockage informatique. Ce dispositif comporte un protocole d'acquittement par le téléphone 1 d'une lecture correcte d'un code barre: Cet acquittement peut se traduire, par exemple, par un signal envoyé par une diode réseau du téléphone 1. Cet acquittement peut aussi se traduire par un clignotement de l'écran 7 (clignotement noir et blanc ou rouge par exemple) ou par un signal sonore. Cet acquittement permet le pilotage d'un diaporama du dispositif.

Ce processus de paramétrage peut se faire, par exemple, grâce à un écran d'un moniteur ou grâce à une projection de type diapositives. Ainsi une parallélisation du processus avec plusieurs téléphones mobiles 1 observant le même motif est possible.

Dans une réalisation, l'utilisation d'une caméra couleur peut permettre d'utiliser des codes barres couleurs. Ainsi le paramètre couleur permet de définir des informations supplémentaires.

Le téléphone 1 peut ne pas comporter de connecteur de fond de boîtier. Le téléphone 1 n'établit pas de lien série électrique. Les paramétrages du téléphone 1, ne demandant pas une ouverture du téléphone, se font alors grâce à des interprétations d'images de codes barres.

## Revendications

1. Téléphone mobile (1) comportant une caméra (2), un microprocesseur (9) et une mémoire programme (26), **caractérisé en ce que**, pour lire des codes barres avec la caméra, la mémoire programme mémorise un sous-programme (25) permettant une conversion d'un signal en un format vidéo saisi par la caméra, et représentatif d'une image d'un code barre à lire, en un signal en un format numérique et représentatif de ce code barre, et **en ce qu'**il comporte des circuits pour interpréter ces codes barres.

2. Téléphone selon la revendication 1, **caractérisé en ce qu'**il comporte des circuits (28) pour montrer sur un écran du téléphone une transcription en clair de l'image du code barre.

3. Téléphone selon l'une des revendications 1 à 2, **caractérisé en ce qu'**il comporte des circuits pour capturer des images de codes barres, et des circuits pour éditer des signaux de signalisation résultant d'un transcodage d'un signal codé selon un protocole de code barre en un signal codé selon un protocole de téléphonie mobile.

4. Téléphone selon l'une des revendications 1 à 3, **caractérisé en ce qu'**il comporte une mémoire (24) pour mémoriser des données contenues dans un code barre.

5. Téléphone selon l'une des revendications 1 à 4, **caractérisé en ce qu'**il comporte des circuits pour modifier une mémoire (33) programme du téléphone en fonction d'une interprétation d'un code barre lu.

6. Téléphone selon l'une des revendications 1 à 5, **caractérisé en ce que** la caméra est dirigée depuis un coté du boîtier du téléphone où il n'y a pas l'écran.

7. Téléphone selon l'une des revendications 1 à 6, **caractérisé en ce que** la caméra est montée sur un volet orientable,

8. Téléphone selon l'une des revendications 1 à 7, **caractérisé en ce qu'**il comporte des circuits pour qu'une utilisation d'une caméra soit fonction de l'orientation.

9. Téléphone selon l'une des revendications 1 à 8, **caractérisé en ce qu'**il comporte un indicateur de mise au point d'une image d'un code barre.

10. Téléphone selon l'une des revendications 1 à 9, **caractérisé en ce qu'**il ne comporte pas de connecteur de fond de boîtier.

11. Procédé de programmation d'un téléphone mobile **caractérisé en ce qu'**il comporte les étapes suivantes :
- on lit un code barre avec une caméra de ce téléphone mobile,
- et on programme le téléphone avec le contenu d'un code barre lu.

12. Procédé selon la revendication 11, **caractérisé en ce que**
- on transmet à un opérateur une identité d'un code barre lu.
